# EUROPÄISCHE PATENTSCHRIFT

(11) **EP 1 841 083 B1**
(45) Veröffentlichungstag und Bekanntmachung des Hinweises auf die Patenterteilung: **24.04.2013**
(21) Anmeldenummer: 07090033.7
(22) Anmeldetag: 27.02.2007
(51) Int. Cl.: H04B 1/40

(54) **Mehrbandfähige Schaltungsanordnung zur Kompensation der in Signalwegen zu einer Antenne auftretenden Dämpfung**
Multiband capable circuit configuration for compensating the attenuation which arises in the signalling pathway to an antenna
Circuit pouvant avoir plusieurs bandes destiné à la compensation de parcours de signaux pour une atténuation se trouvant sur une antenne

(30) Priorität: 06.03.2006 DE 102006010963
(43) Veröffentlichungstag der Anmeldung: 03.10.2007
(73) Patentinhaber: Funkwerk Dabendorf GmbH, 15806 Dabendorf (DE)
(72) Erfinder: Nast, Helmut, 12557 Berlin (DE); Jacobi, Raimo, 12557 Berlin (DE)
(74) Vertreter: Patentanwälte Bressel und Partner

(56) Entgegenhaltungen:
- EP-A- 1 615 348
- WO-A-2004/105263
- DE-A1- 10 114 532

## Beschreibung

Die Erfindung betrifft eine mehrbandfähige Schaltungsanordnung zum Kompensieren der in Signalwegen zu und natürlich auch von einer externen Antenne, beispielsweise einem Antennenzuleitungskabel, für ein Mobilfunkgerät beim Senden und Empfangen von Mobilfunksignalen auftretenden Dämpfung. Sie bezieht sich insbesondere auf eine Schaltungsanordnung, wie sie in Kraftfahrzeugen zum Kompensieren der Dämpfung in der Antennenzuleitung zwischen einem im Fahrzeug betriebenen Mobilfunkgerät und einer externen Antenne Verwendung findet.

Vorzugsweise im Zusammenhang mit dem Einsatz von Freisprecheinrichtungen werden Mobilfunkgeräte in Kraftfahrzeugen an einer externen Antenne betrieben, um einerseits trotz der abschirmenden Wirkung der Fahrzeugkarosserie einen sicheren Betrieb zu ermöglichen und andererseits die beim Betrieb des Mobilfunkgeräts auftretende Strahlung aus dem Innenraum des Fahrzeugs fernzuhalten. Dabei wird das Handy beziehungsweise die Freisprecheinrichtung über ein HF-Kabel und gegebenenfalls über einen elektromagnetischen Koppler beziehungsweise einen kapazitiven oder induktiven Koppler mit der externen Antenne verbunden. Allerdings unterliegen die Sende- und Empfangssignale in den Signalwegen zur beziehungsweise von der Antenne einer Dämpfung. Um hieraus gegebenenfalls zu erwartende Qualitätseinbußen zu vermeiden, wurden Schaltungsanordnungen zur Kompensation der Dämpfung im Sende- und Empfangsbetrieb entwickelt. Eine entsprechende Schaltungsanordnung ist beispielsweise durch die DE 195 36 640 A1 bekannt geworden. Die in der genannten Druckschrift beschriebene Schaltungsanordnung ist für den Betrieb in einem Mobilfunkfrequenzband ausgelegt.

Zwischenzeitlich existieren jedoch unterschiedliche Mobilfunknetze, bei denen verschiedene Trägerfrequenzen zum Einsatz gelangen. So findet der GSM-Standard für die Mobilfunktelefonie sowohl in Netzen mit einer Trägerfrequenz von 900 MHz als auch in solchen mit 1800 MHz Verwendung. Als Folge dieser Entwicklung sind moderne Mobilfunkgeräte beziehungsweise Handys häufig zwei- oder mehrbandfähig. Dies macht es erforderlich, auch die der Dämpfungskompensation in den Signalwegen zur beziehungsweise von der Antenne dienenden Schaltungen für einen mehrbandigen Betrieb auszulegen, um Einschränkungen hinsichtlich der Art der mit ihnen verwendeten Geräte und

Funknetze zu vermeiden. Eine entsprechende, dualbandige Schaltungsanordnung wird durch die DE 199 13 064 C1 offenbart.

Die Entwicklung unterschiedlicher Funknetze ist jedoch nicht auf die Veränderung der Trägerfrequenzen beschränkt. Nachdem die Mobilfunktelefonie insbesondere in Europa lange Zeit durch die Verwendung des GSM-Standard bestimmt war, treten nun neue Standards hinzu, durch welche technische Grenzen des GSM-Standards im Hinblick auf die Übertragungsbandbreite und die Anzahl der das Netz innerhalb einer Funkzelle gleichzeitig verwendenden Nutzer überwunden werden sollen. Während Mobilfunknetze nach dem GSM-Standard zeitschlitzgesteuert arbeiten, mit einem Sendezeitschlitz und sieben Empfangszeitschlitzen innerhalb eines acht Zeitschlitze gleicher Länge umfassenden Zeitrahmens, ermöglichen neuere Mobilfunkstandards, wie UMTS, einen vollduplexfähigen Betrieb. Dabei arbeiten UMTS-Systeme und andere CDMA-Systeme (Code Devision Multiple Access) wahlweise zeitschlitzgesteuert oder im Continuous-Wave-Modus und ermöglichen eine Wechsel zwischen für das Empfangen und Senden unterschiedlichen Trägerfrequenzen.

Durch die DE 101 14 532 A1 wird eine Schaltungsanordnung zur Kompensation der Dämpfung in einem Antennenzuleitungskabel beschrieben, welche sowohl den Betrieb mit nach dem GSM-Standard arbeitenden Handys, als auch mit für den UMTS-Standard ausgelegten Geräten gestattet. Mittels geräteseitig und antennenseitig angeordneten Frequenzbandweichen, so genannten Diplexern, werden dabei die Sende- und Empfangssignale unterschiedlichen Schaltungsteilen zugeführt, wobei ein Schaltungsteil für den UMTS-Betrieb und ein anderer für den GSM-Betrieb ausgelegt ist. Innerhalb dieser Schaltungsteile werden die Sende- und Empfangssignale unterschiedlichen, mit einem Leistungsverstärker beziehungsweise einem Empfangsverstärker ausgestatteten Signalzweigen zugeführt. Dabei wird zwischen dem Sende- und dem Empfangsbetrieb mittels eines Detektors zur Detektion eines Sendesignals unterschieden. Die Detektoren sind, ausgehend vom Mobilfunkgerät, dem geräteseitigen Diplexer nachgeschaltet, in den beiden für den UMTS-Betrieb und den GSM-Betrieb vorgesehenen Schaltungsteilen angeordnet. Das heißt ein von dem Mobilfunkgerät ausgehendes Sendesignal passiert zunächst den Diplexer, wird durch diesen in Abhängigkeit seiner Frequenz entweder dem für den GSM-Betrieb oder dem für den UMTS-Betrieb ausgebildeten Schaltungsteil zugeleitet und erst dann, in dem entsprechenden Schaltungsteil als Sendesignal erkannt. Hierdurch ist es zwar theoretisch möglich, beispielsweise gleichzeitig Daten über den UMTS-Schaltungsteil auszusenden und ein Telefongespräch über den GSM-Zweig zu führen. Jedoch haben sich die Frequenzbandweichen beziehungsweise Diplexer im Hinblick auf den geringen Frequenzabstand zwischen dem GSM1800-Standard und dem UMTS-Standard bei der praktischen Umsetzung als problematisch erwiesen. Dabei ist es möglich, dass Anteile eines GSM1800-Sendesignals über den antennenseitigen Diplexer hinweg in den UMTS-Schaltungsteil übersprechen und dort zu Störungen sowohl im Empfangszweig als auch im Sendezweig führen. Um dies sicher zu verhindern, wäre zur Realisierung der Diplexer ein Schaltungsaufwand erforderlich, der mit den heute verfügbaren elektronischen Bauelementen unverhältnismäßig beziehungsweise nur mit vergleichsweise großvolumigen Baueinheiten zu bewerkstelligen wäre.

Der Erfindung liegt daher die Aufgabe zugrunde, eine alternative, mehrbandfähige Sende- und Empfangsschaltung zur Dämpfungskompensation bereitzustellen, welche sowohl für den Betrieb mit GSM-Geräten als auch mit Geräten für CDMA-Systeme betrieben werden kann und dabei eine gegenseitige Beeinflussung der für die unterschiedlichen Systeme beziehungsweise Standards ausgebildeten Schaltungsteile vermeidet sowie geringere Anforderungen an Filterelemente beziehungsweise Frequenzweichen stellt.

Die Aufgabe wird durch eine Schaltungsanordnung mit den Merkmalen des Hauptanspruchs gelöst. Vorteilhafte Aus- beziehungsweise Weiterbildungen der Schaltungsanordnung sind durch die Unteransprüche gegeben.

Die zur Lösung der Aufgabe vorgeschlagene mehrbandfähige Schaltungsanordnung besteht in an sich bekannter Weise im Wesentlichen aus mehreren Empfangsverstärkern zum Verstärken von empfangenen, dem Mobilfunkgerät zuzuführenden Mobilfunksignalen und mehreren Leistungsverstärkern zum Verstärken von über die externe Antenne abzustrahlenden Sendesignalen des Mobilfunkgerätes. Sie umfasst ferner Frequenzfilter sowie mehrere Einheiten zur Detektion eines Sendesignals des mit der Schaltungsanordnung betriebenen Mobilfunkgerätes und von diesen Detektoreinheiten betätigte elektrische oder elektronische Schaltmittel. Dabei ist die Schaltungsanordnung für den Betrieb in verschiedenen vorgegebenen Frequenzbändern sowohl mit nach dem GSM-Standard arbeitenden Mobilfunkgeräten, als auch mit nach einem CDMA-basierten Mobilfunkstandard arbeitenden Mobilfunkgeräten ausgebildet. Sie ist in der Weise ausgelegt, dass sie in Abwesenheit eines Sendesignals des mit ihr betriebenen Mobilfunkgerätes, bestimmt durch die bereits erwähnten Schaltmittel, einen Grundschaltungszustand einnimmt, in welchem der Empfang von Mobilfunksignalen nach jedem der vorgenannten Standards und unterstützten Frequenzbänder ermöglicht ist und die Leistungsverstärker stromlos geschaltet sind. Das heißt, im Grundschaltungszustand (Empfangszustand) ist die Schaltungsanordnung für alle empfangbaren Signale der vorgenannten Mobilfunkstandards in den unterstützten Frequenzbänder quasi transparent, so dass alle derartigen von im Empfangsbereich gelegenen Basisstationen abgestrahlten Mobilfunksignale in jedem Falle von der externen Antenne zu dem mit der Schaltungsanordnung betriebenen Mobilfunkgerät gelangen, unabhängig davon, ob es sich dabei um GSM-Signale oder um Mobilfunksignale nach einem CDMA-basierten Mobilfunkstandard handelt. Selbstverständlich werden von dem Mobilfunkgerät jedoch nur die, entsprechend der Rufnummer, für das betreffende Mobilfunkgerät bestimmten Empfangssignale verarbeitet.

In erfindungswesentlicher Weise ist die Schaltungsanordnung darüber hinaus so ausgebildet, dass sie in Anwesenheit eines von den Detektoreinheiten detektierten Sendesignals in einen Schaltzustand wechselt, bei dem in Abhängigkeit von der Frequenz des detektierten Sendesignals entweder das Aussenden von Mobilfunksignalen einer Frequenz des GSM-Standards oder das Aussenden und Empfangen von Mobilfunksignalen nach einem CDMA-basierten Mobilfunkstandard über die externe Antenne ermöglicht und nur der zur Verstärkung von Signalen mit entsprechender Frequenz jeweils vorgesehene Leistungsverstärker eingeschaltet ist. Obwohl in dem zuletzt beschriebenen Schalt- beziehungsweise Betriebszustand, zumindest dann, wenn dieser aufgrund der Detektion eines CDMA-basierten Sendesignals eingenommen wird, vollduplex auch das Empfangen entsprechender CDMA-basierter Signale möglich ist, soll dieser Schaltzustand, zur Unterscheidung von dem auch als Empfangszustand bezeichneten Grundschaltungszustand, im Weiteren auch als

Sendezustand bezeichnet werden.

Das Umschalten in den Sendezustand erfolgt mit Hilfe der Schaltmittel, die durch die Detektoreinheiten frequenzselektiv angesteuert werden. Auf diese Weise werden in Abhängigkeit des von den Detektorschaltungen detektierten Sendesignals des mit der Schaltungsanordnung betriebenen Mobilfunkgerätes entweder nur GSM-Sendesignale oder nur CDMA-basierte Sendesignale über die externe Antenne abgestrahlt. Allerdings arbeitet die Schaltungsanordnung im Falle der Detektion eines CDMA-basierten Sendesignals, wie bereits erwähnt, voll duplexfähig, so dass sie sowohl die Dämpfung von Sendesignalen als auch die Dämpfung von Empfangssignalen des entsprechenden CDMA-basierten Mobilfunkstandards kompensiert. Aufgrund der frequenzselektiven Betätigung der Schaltmittel, nehmen deren Kontakte jeweils einen der detektierten Situation (Abwesenheit oder Anwesenheit sowie Art eines gegebenenfalls detektierten Sendesignals) entsprechenden Schaltzustand ein. Insoweit wird ein gegebenenfalls von den Detektoreinheiten detektiertes Sendesignal dem jeweils zutreffenden Signalzweig (GSM-Sendezweig oder Sendezweig für ein CDMAbasiertes Sendesignal) nicht, wie nach dem Stand der Technik über eine Frequenzbandweiche sondern aufgrund einer eindeutigen Schaltstellung der Kontakte der Schaltmittel zugeführt. Ein eventuelles Übersprechen zwischen den Signalzweigen wird dadurch sicher vermieden.

Entsprechend einer praxisgerechten, bevorzugten Ausbildungsform weist die erfindungsgemäße Schaltungsanordnung drei Schaltungsteile auf, nämlich:
- einen ersten, ausschließlich zur Verstärkung empfangener Mobilfunksignale ausgebildeten Schaltungsteil (im Weiteren auch Empfangsteil) mit mindestens einem als Empfangsverstärker wirkenden Low-Noise-Verstärker,
- einen zweiten Schaltungsteil mit mindestens einem Leistungsverstärker, der zur Verstärkung von dem Mobilfunkgerät über die externe Antenne ausgesendeter Mobilfunksignale nach dem GSM-Standard ausgebildet ist,
- einen dritten Schaltungsteil, der zur Verstärkung von Mobilfunksignalen nach einem CDMA-basierten Mobilfunkstandard ausgebildet ist und mindestens einen Empfangsverstärker zur Verstärkung empfangener Mobilfunksignale und einen Leistungsverstärker zur Verstärkung vom Mobilfunkgerät ausgehender Mobilfunksignale aufweist.

Die Schaltungsteile dieser Ausbildungsform der erfindungsgemäßen Schaltungsanordnung sind antennen- und geräteseitig über die bereits erwähnten, von den Detektionseinheiten betätigten Schaltmittel zusammengeführt. Durch diese wird in Abwesenheit eines Sendesignals der erstgenannte Schaltungsteil und in Anwesenheit eines Sendesignals des Mobilfunkgerätes, in Abhängigkeit von dessen Frequenz, einer der beiden anderen genannten Schaltungsteile aktiviert.

Entsprechend einer Weiterbildung der zuvor beschriebenen bevorzugten Ausbildungsform ist die Schaltungsanordnung dabei außerdem so ausgelegt, dass über zusätzliche, ebenfalls durch die Detektoreinheiten betätigte Schaltmittel in Anwesenheit eines Sendesignals der oder die Empfangsverstärker des erstgenannten Schaltungsteils, also des Empfangsteils, stromlos geschaltet sind.

In dem Empfangsteil ist gegebenenfalls nur ein breitbandig ausgebildeter Empfangsverstärker (Low-Noise-Verstärker) angeordnet, durch welchen sowohl eingehende GSM-Signale, als auch eingehende CDMA-Signale verstärkt werden und somit ihre Dämpfung kompensiert wird. Jedoch kann derr Empfangsteil in vorteilhafter Weise auch mehrere Frequenzzweige für jeweils einen der vorgenannten Mobilfunkstandards aufweisen. Diesen kann wiederum, entsprechend einer besonders vorteilhaften Ausbildungsform, antennenseitig ein breitbandiger Empfangs- beziehungsweise Low-Noise-Verstärker vorgeschaltet sein, welcher unabhängig von der Art des jeweils empfangenen Mobilfunksignals, dessen durch die Schaltungsanordnung selbst hervorgerufene Dämpfung kompensiert.

Bei einer möglichen Ausführung der mehrere Frequenzzweige im Empfangsteil umfassenden Variante der erfindungsgemäßen Schaltungsanordnung sind sowohl die an diesen Frequenzzweigen antennenseitig angeordnete Einheit zur Signalverzweigung als auch die geräteseitig angeordnete Einheit zur Signalzusammenführung vorzugsweise als Triplexer ausgebildet. Möglich ist aber auch die Verwendung eines Splitters antennenseitig beziehungsweise eines Combiners geräteseitig.

Gemäß einer besonders vorteilhaften Weiterbildung der bevorzugten, aus drei Schaltungsteilen bestehenden Ausbildungsform sind der Empfangsverstärker des Empfangsteils und der Empfangsverstärker des duplexfähigen Schaltungsteiles für die CDMA-basierten Mobilfunksignale durch einen von beiden Schaltungsteilen gemeinsam genutzten Empfangsverstärker realisiert. Dieser wird mit Hilfe der Schaltmittel wechselweise in den zur Verstärkung empfangener Mobilfunksignale (Empfangsteil) ausgebildeten Schaltungsteil und den zum Senden und Empfangen CDMA-basierter Mobilfunksignale ausgebildeten Schaltungsteil einbezogen.

Entsprechend einer praxisgerechten Ausbildungsform weist der Empfangsteil der erfindungsgemäßen Schaltungsanordnung einen Frequenzzweig zur Verstärkung eines eingehenden GSM900-Signals, einen Frequenzzweig zur Verstärkung eines empfangenen GSM1800-Signals und einen Frequenzzweig zur Verstärkung eines empfangenen UMTS-Signals auf. Der zur Verstärkung vom Mobilfunkgerät ausgesendeter GSM-Signale ausgebildete Schaltungsteil weist hierbei vorzugsweise einen Frequenzzweig zur Verstärkung eines ausgehenden GSM900-Signals und einen Frequenzzweig zur Verstärkung eines ausgehenden GSM1800-Signals auf. Der jeweilige Frequenzzweig wird dabei, in Abhängigkeit von der Frequenz eines von dem Mobilfunkgerät ausgesendeten GSM-Signals durch die von den Detektoreinheiten betätigten Schaltmittel dieses Schaltungsteils aktiviert.

Im Hinblick auf die gegenwärtig verwendeten Mobilfunkstandards ist die Schaltungsanordnung durch eine entsprechende Ausbildung der vorstehend näher erläuterten Schaltungsteile und insbesondere ihrer Verstärker, also der Sende- und Empfangsteile, zum Empfangen und Senden von GSM900-,

GSM1800- und UMTS-Signalen ausgebildet.

Vorzugsweise sind ihre Detektoreinheiten zur Detektion des von dem Mobilfunkgerät ausgesendeten Sendesignals dabei so ausgelegt, dass sie bei der Aussendung eines GSM1800-Sendesignals, welches aufgrund der eng zusammen liegenden Frequenzbereiche des GSM1800-Standards und des UMTS-Standards fälschlicherweise auch als UMTS-Sendesignal angesehen werden kann, durch eine entsprechende Betätigung der Schaltmittel immer den GSM1800-Sendezweig des Schaltungsteils zur Aussendung von GSM-Signalen aktivieren.

Gegebenenfalls können dabei auch der Leistungsverstärker zum Kompensieren der Dämpfung eines GSM1800-Sendesignals und der Leistungsverstärker zum Kompensieren der Dämpfung eines UMTS-Sendesignals durch einen von den beiden entsprechenden Schaltungsteilen gemeinsam genutzten Leistungsbeziehungsweise Sendeverstärker realisiert sein. Dies ist durch eine entsprechende Frequenzbandbreite des Verstärkers und durch eine entsprechend ausgelegte Schaltlogik der Schaltmittel zu bewerkstelligen, durch welche der gemeinsam genutzte Leistungsverstärker in Abhängigkeit der Frequenz des detektierten Sendesignals in den jeweiligen Schaltungsteil einbezogen wird.

Die Erfindung soll nachfolgend von Ausführungsbeispielen nochmals näher erläutert werden. In den zugehörigen Zeichnungen zeigen:
- Fig. 1:: Ein Blockschaltbild einer bevorzugten Ausbildungsform der erfindungsgemäßen Schaltungsanordnung zur Dämpfungskompensation
- Fig. 2:: Eine Variante der Schaltungsanordnung nach Fig. 1 mit einer modifizierten Detektoreinheit zur Detektion von GSM-Signalen
- Fig. 3:: Eine Weiterbildung der in der Fig. 1 gezeigten Ausbildungsform der Erfindung
- Fig. 4:: Eine Ausführungsform mit einem gemeinsamen Leistungsverstärker für ein GSM1800-Sendesignal und ein UMTS-Sendesignal
- Fig. 5:: Eine Weiterbildung der grundsätzlichen Ausbildungsform gemäß Fig. 1 mit sicherer Erkennung eines GSM-1800-Sendesignals.

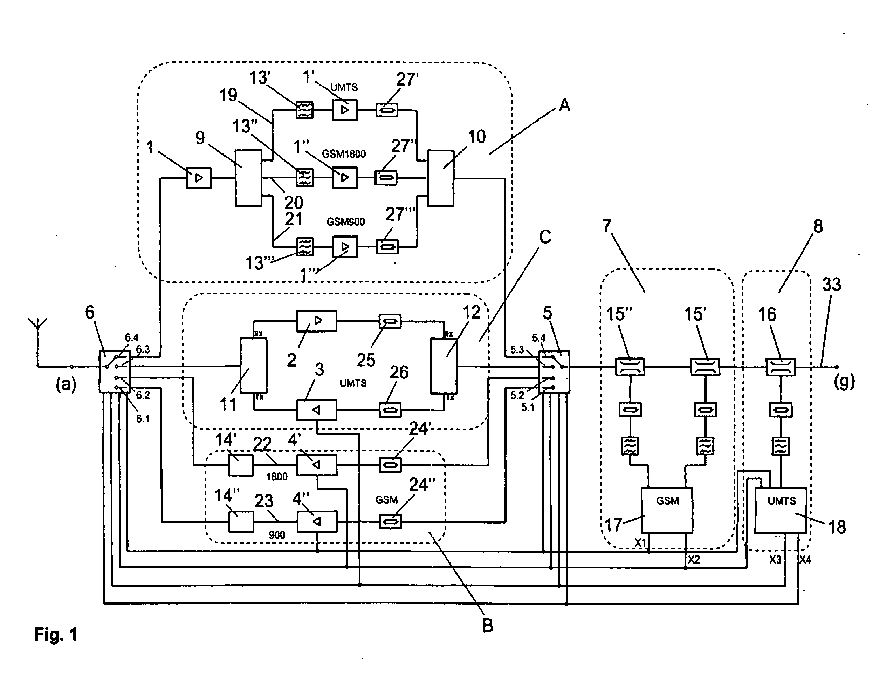

Das in der Fig. 1 dargstellte Ausführungsbeispiel der erfindungsgemäßen, hier in ein Antennenzuleitungskabel eingefügten Schaltungsanordnung für einen mehrbandigen Betrieb, mittels welcher sowohl nach dem GSM-Standard als auch nach dem UMTS-Standard (Universal Mobile Telecommunications-System) arbeitende Mobilfunkgeräte betrieben werden können, umfasst im Wesentlichen drei Schaltungsteile A, B, C, welche antennenseitig a und geräteseitig g über Schaltmittel 5, 6 zusammengeführt sind. Das geräteseitig g an die Schaltungsanordnung anzuschließende Mobilfunkgerät, beispielsweise ein Handy, ist in der Zeichnung nicht dargestellt.

Durch die von Detektoreinheiten (7, 8) betätigten Schaltmittel (5, 6) wird jeweils einer der Schaltungsteile A, B, C aktiviert. Dabei ist der Schaltungsteil A im Grundzustand der Schaltungsanordnung, also auch nach deren Inbetriebnahme, aktiviert und ist darüber hinaus immer dann aktiv, wenn von den Detektoreinheiten 7, 8 kein ausgehendes Sendesignal des mit der Schaltungsanordnung betriebenen Mobilfunkgerätes beziehungsweise Handys detektiert wird. Hierzu wird aus den Signalen X1, X2 und X3 das logische Signal X4 gebildet, durch welches die Schaltmittel 5, 6 den Schaltzustand 5.4 und 6.4 einnehmen und der Schaltungsteil A aktiviert wird. Der insoweit als Empfangsteil arbeitende Schaltungsteil A weist drei Frequenzzweige 19, 20, 21 mit je einem Empfangsverstärker 1', 1 ", 1"' auf, welche antennenseitig a an einem Triplexer 9 und geräteseitig g an einem Triplexer 10 zusammengeführt sind. Anstelle der Triplexer 9, 10 können gegebenenfalls, abweichend von dem in der Zeichnung dargestellten Beispiel, auch ein Splitter 9 und ein Combiner 10 verwendet werden. Von den Frequenzzweigen 19, 20, 21 des Schaltungsteils A ist einer zum Empfang von GSM900-Signalen, einer zur Verstärkung eingehender GSM1800-Signale und einer zum Empfang von UMTS-Signalen ausgebildet. Neben den entsprechenden an die jeweilige Frequenz angepassten Empfangsverstärkern 1', 1", 1"' weisen die Frequenzzweige jeweils ein schmalbandiges Filter 13', 13", 13"' und Mittel 27', 27", 27"' zur Anpassung der Verstärkung an die Kabeldämpfung auf. Zudem ist dem Triplexer 9 antennenseitig a ein weiterer, zur Kompensation der durch die Schaltungsanordnung selbst verursachten Dämpfung dienender breitbandiger Empfangsverstärker 1 vorgeschaltet.

Der als reine Sendeeinheit zur Aussendung von GSM-Signalen ausgebildete Schaltungsteil B weist zwei Frequenzzweige 22, 23 auf, vermittels welcher sowohl die Dämpfung eines GSM900-Sendesignals als auch die Dämpfung eines GSM1800-Sendesignals eines nicht dargestellten, geräteseitig g angeschlossenen Handys kompensiert wird. Je nach der Frequenz des durch die zugehörige Detektionseinheit detektierten Sendesignals wird einer der beiden Frequenzzweige 22, 23 des Schaltungsteils B aktiviert. In beiden Frequenzzweigen 22, 23 des Schaltungsteils B sind jeweils ein Leistungsverstärker 4', 4" und ein Oberwellenfilter 14', 14" angeordnet.

Der dritte, in der Bildmitte dargestellte Schaltungsteil C dient zum Senden und Empfangen eines UMTS-Signals. Dabei wird der Tatsache Rechnung getragen, dass CDMA-basierte Mobilfunkstandards einen Vollduplexbetrieb ermöglichen. Somit ist nach der Aussendung eines durch den Leistungsverstärker 3 verstärkten UMTS-Signals durch das Handy zwar der Empfangsteil (Schaltungsteil A) deaktiviert, jedoch wird die auf eingehende UMTS-Signale wirkende Dämpfung weiterhin durch den Empfangsverstärker 2 des Schaltungsteils C kompensiert. Der Sende- und der Empfangszweig des Schaltungsteils C sind antennen- und geräteseitig an Duplexfiltern 11, 12 zusammengeführt.

Die Schaltungsteile A, B, C sind, wie aus der Zeichnung zu erkennen, antennen-und geräteseitig über die durch die Detektionseinheiten 7, 8 betätigten Schaltmittel 5, 6 zusammengeführt. Die Schaltmittel 5, 6 können als elektrische oder elektronische Schaltmittel ausgebildet sein. In dem dargestellten Beispiel ist antennen- und geräteseitig jeweils ein SP4T-Schalter (Single Pole 4 Through) angeordnet. Bestimmt durch die Schaltstellung der Kontakte dieser Schaltmittel 5, 6 sind in Abwesenheit eines Sendesignals des Mobilfunkgerätes der Schaltungsteil A und, bei Detektion eines Sendesignals des Mobilfunkgerätes durch eine der Detektoreinheiten 7, 8, der Schaltungsteil B oder C aktiviert. Sofern der Schaltungsteil A aktiviert ist, sind außerdem alle Leistungsverstärker 3, 4', 4" in den Schaltungsteilen B und C stromlos geschaltet.

In erfindungswesentlicher Weise werden die Schaltmittel 5,6 durch die Detektionseinheiten 7, 8 frequenzselektiv betätigt. Das heißt, beim Vorhandensein eines Sendesignals des Mobilfunkgerätes wird ausschließlich durch die Frequenz dieses Sendesignals bestimmt, welcher der Schaltungsteile B oder C und gegebenenfalls welcher Frequenzzweig 22, 23 des Schaltungsteils B aktiviert wird. Außerdem wird gleichzeitig nur der entsprechende Leistungsverstärker 3, 4', 4" angeschaltet, während die anderen Leistungsverstärker weiterhin stromlos bleiben. Das heißt, die Zuführung des Sendesignals des Mobilfunkgerätes zu dem für seine Verstärkung eingerichteten Signalzweig der Schaltung erfolgt nicht über Frequenzbandweichen, sondern wird ausschließlich über die Schaltstellung der Kontakte der Schaltmittel 5, 6 bestimmt. Insoweit ist ein Übersprechen zwischen den einzelnen Schaltungsteilen A, B, C beziehungsweise Frequenzzweigen zuverlässig verhindert. Die Detektoreinheiten 7, 8 umfassen, neben den eigentlichen Detektoren 17, 18, Leitungskoppler 15', 15", 16 zur geräteseitigen g Auskopplung eines Sendesignals aus dem Antennenzuleitungskabel 33 und diverse, in der Fig. 1 nicht näher bezeichnete, aber für den Fachmann erkennbare Filtereinheiten. Ein von dem Mobilfunkgerät ausgehendes Sendesignal wird über Leitungskoppler 15', 15", 16 der Detektoreinheiten 7, 8 ausgekoppelt und im Zuge dessen auch als Sendesignal detektiert. Bei der beispielhaft dargestellten Schaltungsanordnung sind zwei Detektoreinheiten 7, 8, nämlich eine Detektoreinheit 8 für ein UMTS-Sendesignal und eine Detektoreinheit 7 für ein GSM-Sendesignal, realisiert. Bezüglich eines GSM-Sendesignals erfolgt die Differenzierung zwischen einem GSM900- und einem GSM1800-Sendesignal durch entsprechende unterschiedliche Leitungskoppler 15", 15' und dadurch, dass das von diesen ausgekoppelte Sendesignal über Filtereinheiten einem speziellen GSM900- beziehungsweise einem GSM1800-Eingang des Detektors 17 zugeführt wird. Die Verstärkungen der Empfangsverstärker 1,1', 1", 1"', 2 und Leistungsverstärker 3, 4', 4" sind mittels entsprechender Einstellmittel 24', 24", 25, 26, 27', 27", 27"' beziehungsweise Attenuatoren entsprechend der Dämpfung einstellbar.

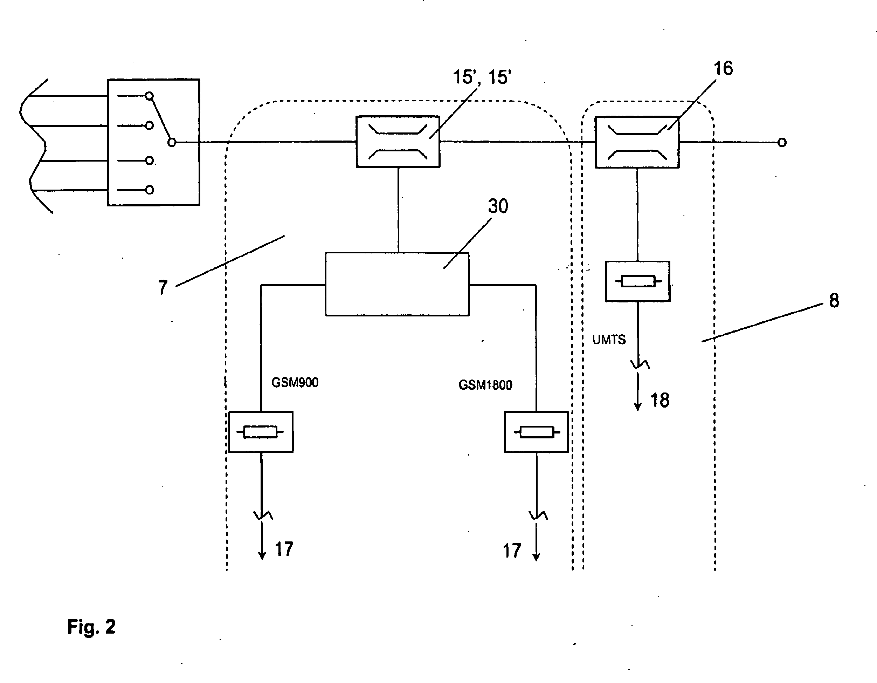

In Modifikation der in der Fig. 1 gezeigten Schaltungsanordnung kann das GSM-Sendesignal, unabhängig davon, ob es sich bei diesem um ein GSM900- oder ein GSM1800-Signal handelt, gegebenenfalls auch unter Verwendung nur eines Leitungskopplers 15', 15" ausgekoppelt werden, dessen ausgekoppeltes Signal über einen Diplexer 30 einem GSM900- oder einem GSM1800-Signalzweig der Detektoreinheit 7 zugeführt wird. Diese Modifikation des entsprechenden Schaltungsteils ist in der Fig. 2 verdeutlicht.

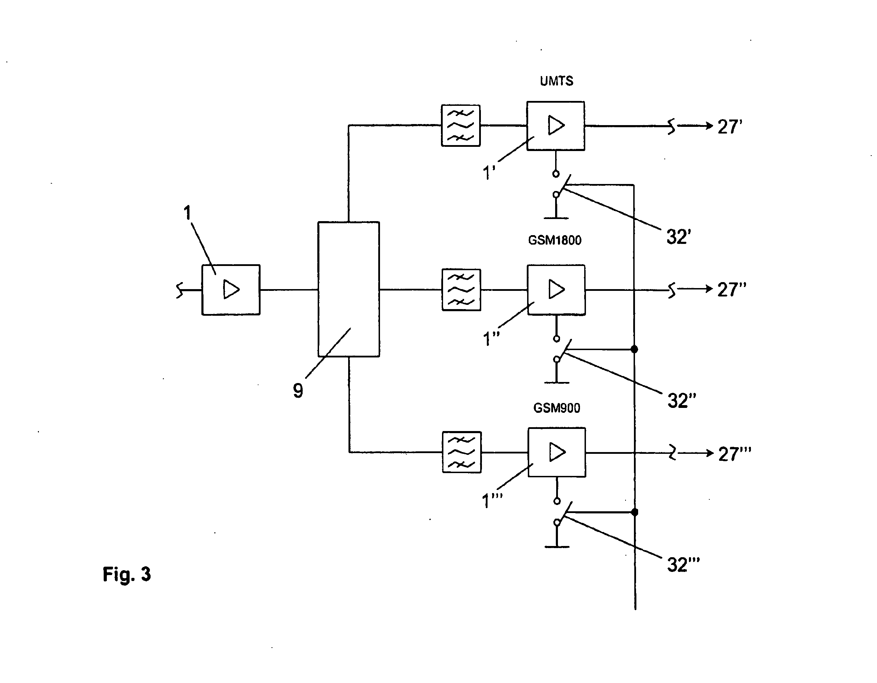

Eine weitere bevorzugte Weiterbildung der Schaltungsanordnung nach der Fig. 1 ist in der Fig. 3 gezeigt. Bei dieser werden im Falle der Detektion eines Sendesignals des Mobilfunkgerätes nicht nur der Schaltungsteil B oder C aktiviert, sondern gleichzeitig die Empfangsverstärker 1', 1", 1'" in den drei Frequenzzweigen 19, 20, 21 des Schaltungsteils A durch zusätzliche, ebenfalls von den Detektionseinheiten 7, 8 betätigte Schaltmittel 32', 32", 32'" stromlos geschaltet. Mit der hierdurch erreichten Stromersparnis ist in vorteilhafter Weise auch eine Verringerung der insbesondere im UMTS-Betrieb auftretenden Wärmeentwicklung verbunden.

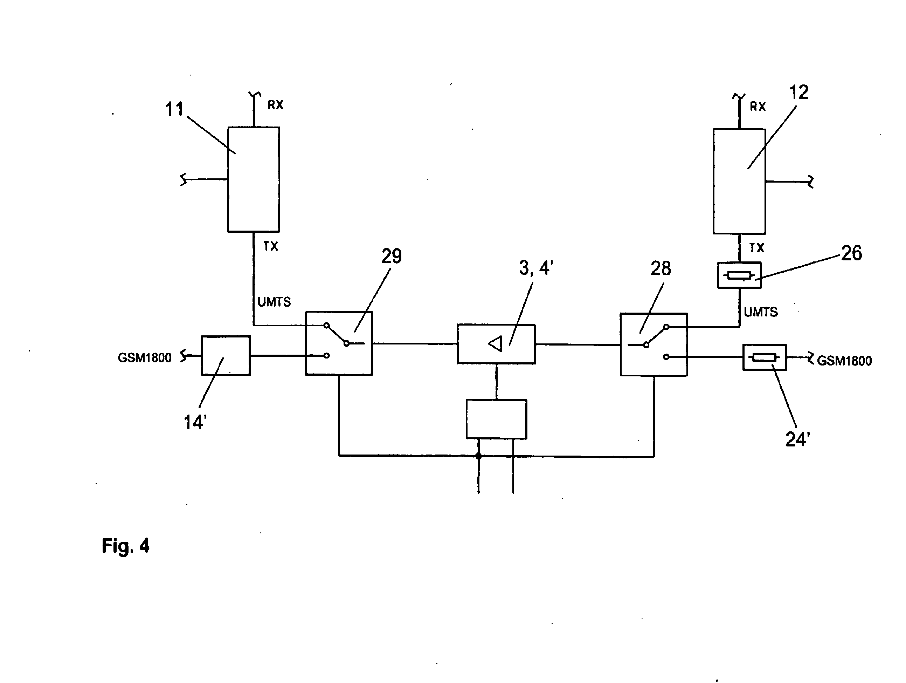

Eine weitere Modifikationsmöglichkeit der Schaltungsanordnung nach der Fig. 1 ist in der Fig. 4 dargestellt. Bei dieser ist anstelle des im GSM1800-Sendezweig 22 des Schaltungsteils B nach der Fig. 1 angeordneten Leistungsverstärkers 4' und des im UMTS-Teil beziehungsweise im Schaltungsteil C angeordneten Leistungsverstärkers 3 ein gemeinsamer Leistungsverstärker 3, 4' für GSM1800- und UMTS-Sendesignale vorgesehen. Der gemeinsame Leistungsverstärker 3, 4' wird entsprechend, in Abhängigkeit der Art des von den Detektoreinheiten detektierten Sendesignals, entweder in den Schaltungsteil B oder den Schaltungsteil C einbezogen. Dies wird mittels zusätzlicher, ebenfalls durch die Detektoreinheiten betätigter Schaltmittel 28, 29 (SPDT - Single Pole Double Through) bewerkstelligt. Diese sind an die entsprechenden in den Fig. 1 und 4 gekennzeichneten Ausgänge der Detektoreinheiten 7, 8 angeschlossen.

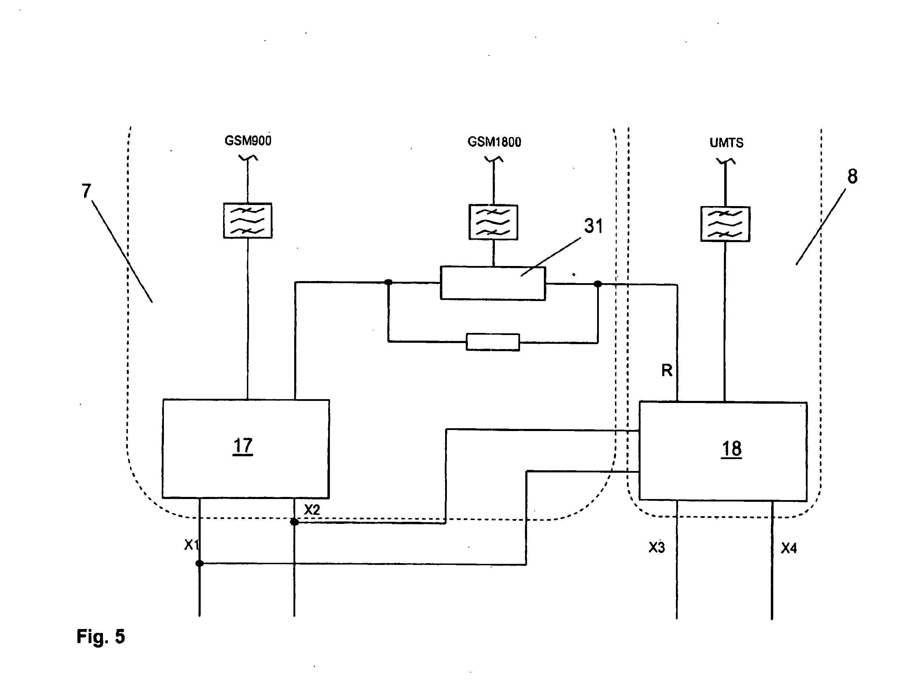

Aufgrund dessen, dass die Frequenzbänder eines GSM1800- und eines UMTS-Sendesignals sehr eng beieinander liegen und die Empfindlichkeitsschwelle der UMTS-Detektoreinheit 8 standardbedingt um ca. 30 dB niedriger liegt als die der GSM-Detektoreinheit 7, ist es möglich, dass durch ein GSM1800-Sendesignal auch der UMTS-Detektor 18 ausgelöst wird. Dies wird durch eine Modifikation der Schaltungsanordnung entsprechend der Fig. 5 verhindert. Dabei wird ein über den Leitungskoppler 15' für das GSM1800-Sendesignal ausgekoppeltes Signal über einen Splitter 31 nicht nur dem Detektor 17 der Detektoreinheit 7 für GSM-Sendesignale, sondern auch dem Detektor 18 der Detektoreinheit 8 für das UMTS-Sendesignal als Referenzsignal zugeführt. Soweit nun sowohl an dem UMTS-Eingang des UMTS-Detektors 18 als auch an dessen Referenzeingang ein Signal ansteht, wobei das Signal am Referenzeingang pegelmäßig größer ist, als das am UMTS-Eingang, heißt dies, dass es sich bei dem durch den Leitungskoppler 16 für UMTS-Signale ausgekoppelten Signal nicht um ein UMTS-Signal, sondern um ein GSM1800-Sendesignal handelt. Dabei ist der UMTS-Detektor so ausgebildet, dass er von einem an seinem UMTS-Eingang anliegenden Signal nicht ausgelöst wird, wenn gleichzeitig an seinem Referenzeingang ein pegelmäßig größeres Signal anliegt. Folglich wird das detektierte Sendesignal als GSM1800-Sendesignal behandelt und die Schaltmittel 5, 6 werden durch die Detektoreinheiten 7, 8 entsprechend betätigt, so dass sie die Schaltstellungen 5.2 beziehungsweise 6.2 einnehmen.

### Liste der verwendeten Bezugszeichen

- 1, 1', 1", 1"': Empfangsverstärker
- 2: Empfangsverstärker
- 3: Leistungsverstärker
- 4', 4": Leistungsverstärker
- 5, 6: Schaltmittel
- 7, 8: Detektionseinheit
- 9: Einheit zur Signalverzweigung - Triplexer oder Splitter
- 10: Einheit zur Signalzusammenführung - Triplexer oder Combiner
- 11, 12: Diplexer
- 13', 13", 13"': Filter
- 14', 14": Filter
- 15', 15': Leitungskoppler
- 16: Leitungskoppler
- 17: Detektor
- 18: Detektor
- 19 - 23: Frequenzzweig
- 24', 24": Einstellmittel
- 25, 26: Einstellmittel
- 27', 27", 27"': Einstellmittel
- 28, 29: Schaltmittel
- 30: Diplexer
- 31: Splitter
- 32', 32", 32"': Schaltmittel
- 33: Kabel bzw. Antennenzuleitungskabel

## Patentansprüche

1. Mehrbandfähige Schaltungsanordnung zum Kompensieren der Dämpfung von Mobilfunksende- und -empfangssignalen, die in Signalwegen (33) auftreten, welche ein Mobilfunkgerät mit einer externen Antenne verbinden, bestehend aus
- mehreren Empfangsverstärkern (1, 1', 1", 1"', 2) zum Verstärken empfangener, dem Mobilfunkgerät zuzuführender Mobilfunksignale,
- mehreren Leistungsverstärkern (3, 4', 4") zum Verstärken über die externe Antenne abzustrahlender Sendesignale des Mobilfunkgerätes.
- Frequenzfiltern (13', 13", 13"', 14', 14"),
- Detektoreinheiten (7, 8) zur Detektion eines Sendesignals des Mobilfunkgerätes,
- von den Detektoreinheiten (7, 8) betätigbaren elektrischen oder elektronischen Schaltmitteln (5, 6),
wobei die Schaltungsanordnung für den Betrieb in verschiedenen vorgegebenen Frequenzbändern sowohl mit nach dem GSM-Standard arbeitenden Mobilfunkgeräten,
als auch mit nach einem CDMA-basierten Mobilfunkstandard arbeitenden Mobilfunkgeräten ausgebildet ist und die Schaltungsanordnung ferner ausgebildet ist, in Abwesenheit eines Sendesignals des mit ihr betriebenen Mobilfunkgerätes, bestimmt durch die Schaltmittel (5, 6), einen ersten Schaltungszustand, nämlich einen Grundschaltungszustand einzunehmen, in welchem der Empfang von Mobilfunksignalen nach jedem der vorgenannten Standards und unterstützten Frequenzbänder ermöglicht ist und alle Leistungsverstärker (3, 4', 4") stromlos geschaltet sind,
**dadurch gekennzeichnet, dass**
die Schaltungsanordnung ferner ausgebildet ist, mit Hilfe der Detektoreinheiten (7, 8) die Anwesenheit eines Sendesignals des Mobilfunkgerätes zu detektieren und abhängig von der Frequenz des durch die Detektoreinheiten (7, 8) detektierten Sendesignals die Schaltmittel (5, 6) anzusteuern und damit von dem Grundschaltungszustand
- entweder in einen GSM-Schaltungszustand umzuschalten, bei dem das Aussenden von Mobilfunksignalen einer Frequenz des GSM-Standards über einen GSM-Sendezweig und die externe Antenne möglich ist
- oder in einen CDMA-Schaltungszustand umzuschalten, bei dem nach einem CDMA-basierten Mobilfunkstandard das Aussenden über einen Sendezweig für ein CDMA-basiertes Sendesignal und über die externe Antenne und Empfangen von Mobilfunksignalen über die externe Antenne möglich ist
wobei in dem GSM- und CDMA- Schaltungszustand nur der jeweilige, zur Verstärkung von Signalen mit entsprechende Frequenz vorgesehene Leistungsverstärker (3, 4', 4") eingeschaltet ist und wobei die Schaltungsanordnung ausgebildet ist, ein gegebenenfalls von den Detektoreinheiten (7, 8) detektiertes Sendesignal
- in dem GSM-Schaltungszustand dem GSM-Sendezweig oder
- in dem CDMA-Schaltungszustand dem Sendezweig für ein CDMA-basiertes Sendesignal
nicht über eine Frequenzbandweiche sondern aufgrund einer eindeutigen dem GSM- oder CDMA-Schaltungszustand entsprechenden Schaltstellung von Kontakten der Schaltmittel (5) zuzuführen.

2. Schaltungsanordnung nach Anspruch 1, aufweisend
a) einen ersten, ausschließlich zur Verstärkung empfangener Mobilfunksignale ausgebildeten Schaltungsteil (A), in dem mindestens ein Empfangsverstärker (1, 1', 1", 1"') angeordnet ist,
b) einen zweiten Schaltungsteil (B), mit mindestens einem Leistungsverstärker (4', 4"), der zur Verstärkung von dem Mobilfunkgerät über die externe Antenne ausgesendeter Mobilfunksignale nach dem GSM-Standard ausgebildet ist,
c) einen dritten Schaltungsteil (C), der zur Verstärkung von Mobilfunksignalen nach einem CDMA-basierten Mobilfunkstandard ausgebildet ist und mindestens einen Empfangsverstärker (2) zur Verstärkung empfangener Mobilfunksignale und einen Leistungsverstärker (3) zur Verstärkung vom Mobilfunkgerät ausgesendeter Mobilfunksignale aufweist,
wobei die Schaltungsteile (A, B, C) antennenseitig (a) und geräteseitig (g) über die von den Detektoreinheiten (7, 8) betätigten Schaltmittel (5, 6) zusammengeführt sind, wobei die Schaltungsanordnung ausgebildet ist, durch die Schaltmittel (5, 6) in Abwesenheit eines Sendesignals des Mobilfunkgerätes den ersten Schaltungsteil (A) und in Anwesenheit eines Sendesignals des Mobilfunkgerätes, In Abhängigkeit von dessen Frequenz, den zweiten Schaltungsteil (B) oder den dritten Schaltungsteil (C) zu aktivieren.

3. Schaltungsanordnung nach Anspruch 2, **dadurch gekennzeichnet, dass** die Schaltungsanordnung ausgebildet ist, über zusätzliche, ebenfalls durch die Detektoreinheiten (7, 8) betätigte Schaltmittel (32', 32", 32"') in Anwesenheit eines Sendesignals der oder die Empfangsverstärker (1, 1', 1", 1'") des ersten Schaltungsteils (A) abzuschalten, das heißt stromlos zu schalten.

4. Schaltungsanordnung nach Anspruch 2 oder 3, **dadurch gekennzeichnet, dass** der erste Schaltungsteil (A) mehrere Frequenzzweige (19, 20, 21) für jeweils einen der vorgenannten Mobilfunkstandards aufweist, in denen jeweils mindestens ein Empfangsverstärker (1', 1", 1''') angeordnet ist und welche antennenseitig (a) über eine Einheit (9) zur Signalverzweigung sowie geräteseitig (g) über eine Einheit (10) zur Signalzusammenführung miteinander verbunden sind.

5. Schaltungsanordnung nach Anspruch 4, **dadurch gekennzeichnet, dass** im ersten Schaltungsteil (A) als Einheit (9) zur Signalverzweigung antennenseitig (a) und als Einheit (10) zur Signalzusammenführung geräteseitig (g) je ein Triplexer angeordnet ist.

6. Schaltungsanordnung nach Anspruch 4 oder 5, **dadurch gekennzeichnet, dass** zusätzlich zu den Empfangsverstärkern (1', 1", 1"') in den Frequenzzweigen (19, 20, 21) des ersten Schaltungsteils (A) ein breitbandiger Empfangsverstärker (1) angeordnet ist, welcher antennenseitig (a) der Einheit (9) zur Signalverzweigung beziehungsweise dem Triplexer vorgeschaltet ist.

7. Schaltungsanordnung nach einem der Ansprüche 4 bis 6, **dadurch gekennzeichnet, dass** der Empfangsverstärker (2) des dritten Schaltungsteils (C) und der Empfangsverstärker (1') des entsprechenden Frequenzzweiges (19) des ersten Schaltungsteils (A) durch einen von beiden Schaltungsteilen (A, C) gemeinsam genutzten Verstärker (1', 2) realisiert sind, wobei die Schaltungsanordnung ausgebildet ist, diesen Empfangsverstärker (1', 2) durch zusätzliche Schaltmittel wechselweise in den ersten Schaltungsteil (A) oder den dritten Schaltungsteil (C) einzubeziehen.

8. Schaltungsanordnung nach einem der Ansprüche 4 bis 7, **dadurch gekennzeichnet, dass** der zur Verstärkung empfangener Mobilfunksignale ausgebildete erste Schaltungsteil (A) mindestens einen Frequenzzweig (20, 21) zur Verstärkung eines empfangenen GSM-Signals und einen Frequenzzweig (19) zur Verstärkung eines empfangenen UMTS-Signals aufweist.

9. Schaltungsanordnung nach Anspruch 8, **dadurch gekennzeichnet, dass** der zur Verstärkung empfangener Mobilfunksignale ausgebildete erste Schaltungsteil (A) einen Frequenzzweig (21) zur Verstärkung eines empfangenen GSM900-Signals, einen Frequenzzweig (20) zur Verstärkung eines empfangenen GSM1800-Signals und einen Frequenzzweig (19) zur Verstärkung eines empfangenen UMTS-Signals aufweist und der zweite Schaltungsteil (B) zwei Frequenzzweige (22, 23) aufweist, nämlich einen Frequenzzweig (23) zur Verstärkung eines von dem Mobilfunkgerät ausgesendeten GSM900-Signals und einen Frequenzzweig (22) zur Verstärkung eines von dem Mobilfunkgerät ausgesendeten GSM1800-Signals, umfasst, wobei die Schaltungsanordnung ausgebildet ist, in Abhängigkeit von der Frequenz eines von dem Mobilfunkgerät ausgesendeten GSM-Signals durch die von den Detektoreinheiten (7, 8) betätigten Schaltmittel den jeweils entsprechenden Frequenzzweig (22, 23) des zweiten Schaltungsteils (B) zu aktivieren, und dass der dritte Schaltungsteil (C) zum Senden und Empfangen von Mobilfunksignalen nach dem UMTS-Standard ausgebildet ist.

10. Schaltungsanordnung nach Anspruch 9, **dadurch gekennzeichnet, dass** der Leistungsverstarker (3) zur Verstärkung eines von dem Mobilfunkgerät ausgesendeten UMTS-Signals des dritten Schaltungsteils (C) und der Leistungsverstärker (4') zur Verstärkung eines von dem Mobilfunkgerät ausgesendeten GSM1800-Signals des zweiten Schaltungsteils (B) durch einen von beiden Schaltungsteilen (B, C) gemeinsam genutzten Leistungsverstärker (3, 4') realisiert sind, wobei die Schaltungsanordnung derart ausgebildet ist, dass dieser Leistungsverstärker (3, 4') durch Schaltmittel (28, 29) in Abhängigkeit der Art eines von den Detektoreinheiten (7, 8) detektierten Sendesignals des Mobilfunkgerätes wechselweise in den zweiten Schaltungsteil (B) oder den dritten Schaltungsteil (C) einbezogen wird.

11. Schaltungsanordnung nach Anspruch 9 oder 10, **dadurch gekennzeichnet, dass** die Schaltungsanordnung derart ausgebildet ist, dass ein GSM-1800-Sendesignal sowohl einem GSM-Signale detektierenden Detektor (17) der Detektoreinheit (7), als auch als Referenzsignal (R) einem zur Detektion von UMTS-Sendesignalen dienenden Detektor (18) der Detektoreinheit (8) zuführbar ist, so dass bei Vorhandensein des Referenzsignals (R) ein von der, gegenüber der Detektoreinheit (7) empfindlicheren Detektoreinheit (8) vermeintlich detektiertes UMTS-Signal ignoriert und das detektierte Sendesignal von der Schaltungsanordnung als GSM1800-Signal behandelt wird.

## Claims

1. A multiband capable circuit, configuration for compensating the attenuation of mobile communications transmission and receiving signals, which arise in signalling pathways (33) and which connect a mobile communications device to an external antenna, consisting of
- a plurality of receiving amplifiers (1, 1', 1", 1"', 2) for amplifying received mobile communications signals to be fed to the mobile communications device,
- a plurality of power amplifiers (3, 4', 4") for amplifying transmission signals of the mobile communications device to be emitted via the external antenna,
- frequency filters (13', 13" , 13"', 14', 14"),
- detector units (7, 8) for detecting a transmission signal of the mobile communications device,
- electric or electronic switch means (5, 6) actuatable by the detector units (7, 8),
the circuit configuration being designed for operation in different predefined frequency bands both with mobile communications devices operating by the GSM standard and with mobile communications devices operating by a CDMA-based mobile communications standard, and the circuit configuration further being designed to adopt, in the absence of a transmission signal of the mobile communications device operating therewith, determined by the switch means (5, 6), a first switching state, namely a basic switching state in which mobile communications signals can be received by each of the aforementioned standards and supported frequency bands, and in which all power amplifiers (3, 4', 4") are disconnected from the power supply, **characterised in that** the circuit configuration is further designed to detect, with the aid of the detector units (7, 8), the presence of a transmission signal of the mobile communications device and to control, independently of the frequency of the transmission signal detected by the detector units (7, 8), the switch means (5, 6) and therefore
- to switch from the basic switching state either into a GSM switching state in which the transmission of mobile communications signals of a frequency of the GSM standard is possible via a GSM transmission branch and the external antenna,
- or to switch from the basic switching state into a CDMA switching state in which the transmission, via a transmission branch for a CDMA-based transmission signal and via the external antenna, and receiving of mobile communications signals via the external antenna are possible by a CDMA-based mobile communications standard,
only the respective power amplifier (3, 4', 4") provided with appropriate frequency to amplify signals being connected in the GSM and CDMA switching states, and the circuit configuration being designed to feed a transmission signal optionally detected by the detector units (7, 8)
- to the GSM transmission branch in the GSM switching state or
- to the transmission branch for a CDMA-based transmission signal in the CDMA switching state not via a frequency bandwidth, but on the basis of a clear switch position of contacts of the switch means (5) corresponding to the GSM or CDMA switching state.

2. The circuit configuration according to claim 1, comprising
a) a first circuit part (A) designed exclusively to amplify received mobile communications signals and in which at least one receiving amplifier (1, 1', 1", 1"') is arranged,
b) a second circuit part (B) comprising at least one power amplifier (4', 4") which is designed to amplify mobile communications signals transmitted from the mobile communications device via the external antenna by the GSM standard,
c) a third circuit part (C) which is designed to amplify mobile communications signals by a CDMA-based mobile communications standard and comprises at least one receiving amplifier (2) for amplifying received mobile communications signals and a power amplifier (3) for amplifying mobile communications signals transmitted by the mobile communications device,
the circuit parts (A, B, C) being consolidated on the antenna side (a) and on the device side (g) via the switch means (5, 6) actuated by the detector units (7, 8), the circuit configuration being designed to activate, by the switch means (5, 6), the first circuit part (A) in the absence of a transmission signal of the mobile communications device, and the second circuit part (B) or the third circuit part (C) in the presence of a transmission signal of the mobile communications device, as a function of the frequency thereof.

3. The circuit configuration according to claim 2, **characterised in that** the circuit configuration is designed to switch off, that is to say to disconnect from the power supply, the receiving amplifier(s) (1, 1', 1", 1"') of the first circuit part (A) via additional switch means (32', 32", 32"'), likewise actuated by the detector units (7, 8), in the presence of a transmission signal.

4. The circuit configuration according to either claim 2 or claim 3, **characterised in that** the first circuit part (A) comprises a plurality of frequency branches (19, 20, 21) for each of the aforementioned mobile communications standards, in each of which at least one receiving amplifier (1', 1", 1"') is arranged and which are interconnected on the antenna side (a) via a unit (9) for signal branching as well as on the device side (g) via a unit (10) for signal consolidation.

5. The circuit configuration according to claim 4, **characterised in that**, in each case, a triplexer is arranged in the first circuit part (A) as a unit (9) for signal branching on the antenna side (a) and as a unit (10) for signal consolidation on the device side (g).

6. The circuit configuration according to either claim 4 or claim 5, **characterised in that**, in addition to the receiving amplifiers (1', 1'', 1"'), a wide band receiving amplifier (1) is also arranged in the frequency branches (19, 20, 21) of the first circuit part (A) and is arranged on the antenna side (a) of the unit (9) for signal branching or upstream of the triplexer.

7. The circuit configuration according to any one of claims 4 to 6, **characterised in that** the receiving amplifier (2) of the third circuit part (C) and the receiving amplifier (1') of the corresponding frequency branch (19) of the first circuit part (A) are formed by an amplifier (1', 2) used jointly by two circuit parts (A, C), the circuit configuration being designed to include these receiving amplifiers (1', 2) alternately in the first circuit part (A) or in the third circuit part (C) by additional switch means.

8. The circuit configuration according to any one of claims 4 to 7, **characterised in that** the first circuit part (A) designed to amplify received mobile communications signals comprises at least one frequency branch (20, 21) for amplifying a received GMS signal and at least one frequency branch (19) for amplifying a received UMTS signal.

9. The circuit configuration according to claim 8, **characterised in that** the first circuit part (A) designed to amplify received mobile communications signals comprises a frequency branch (21) for amplifying a received GSM900 signal, a frequency branch (20) for amplifying a received GSM1800 signal and a frequency branch (19) for amplifying a received UMTS signal, and the second circuit part (B) comprises two frequency branches (22, 23), namely a frequency branch (23) for amplifying a GSM900 signal transmitted by the mobile communications device and a frequency branch (22) for amplifying a GSM1800 signal transmitted by the mobile communications device, the circuit configuration being designed, as a function of the frequency of a GSM signal transmitted by the mobile communications device, to activate the corresponding frequency branch (22, 23) of the second circuit part (B) by the switch means actuated by the detector units (7, 8), and **in that** the third circuit part (C) is designed to transmit and receive mobile communications signals by the UMTS standard.

10. The circuit configuration according to claim 9, **characterised in that** the power amplifier (3) is formed to amplify a UMTS signal of the third circuit part (C) transmitted by the mobile communications device, and the power amplifier (4') is formed to amplify a GSM1800 signal of the second circuit part (B) transmitted by the mobile communications device by a power amplifier (3, 4') used jointly by both circuit parts (B, C), the circuit configuration being designed in such a way that this power amplifier (3, 4') is included alternately in the second circuit part (B) or in the third circuit part (C) by switch means (28, 29) as a function of the type of transmission signal of the mobile communications device detected by the detector units (7, 8).

11. The circuit configuration according to either claim 9 or claim 1C, **characterised in that** the circuit configuration is designed in such a way that a GSM-1800 transmission signal can be fed both to a detector (17), detecting GSM signals, of the detector unit (7) and as a reference signal (R) to a detector (18), used for detection of UMTS transmission signals, of the detector unit (8) so that, with the presence of the reference signal (R), a UMTS signal supposedly detected by the detector unit (8), which is more sensitive than the detector unit (7), is ignored and the detected transmission signal is processed by the circuit configuration as a GSM1800 signal.

## Revendications

1. Circuit pouvant avoir plusieurs bandes et servant compenser l'atténuation de signaux d'émission et de réception de radiocommunication mobile, qui apparaissent dans des chemins de signaux (33) qui relient un appareil de radiocommunication mobile à une antenne externe, se composant de :
- plusieurs amplificateurs de réception (1, 1', 1", 1"', 2) servant à amplifier des signaux de radiocommunication mobile reçus et devant être amenés à l'appareil de radiocommunication mobile,
- plusieurs amplificateurs de puissance (3, 4', 4") servant à amplifier des signaux d'émission de l'appareil de radiocommunication mobile à émettre par le biais de l'antenne externe,
- des filtres de fréquence (13', 13", 13"', 14', 14"),
- des unités de détection (7, 8) servant à détecter un signal d'émission de l'appareil de radiocommunication mobile,
- des moyens de commutation électriques ou électroniques (5, 6) actionnables par les unités de détection (7, 8),
le circuit étant conçu pour l'exploitation dans différentes bandes de fréquences prédéfinies aussi bien avec des appareils de radiocommunication mobiles fonctionnant selon la norme GSM qu'avec des appareils de radiocommunication mobile fonctionnant selon une norme de radiocommunication mobile basée sur AMRC et le circuit étant en outre conçu de sorte que, en absence d'un signal d'émission de l'appareil de radiocommunication mobile exploité avec ledit circuit, il prenne d'une manière déterminée par les moyens de commutation (5, 6), un premier état de circuit, à savoir un état de circuit de base dans lequel la réception de signaux de radiocommunication mobile est rendue possible selon chacune des normes susmentionnées et selon chacune des bandes de fréquences supportées et dans lequel aucun amplificateur de puissance (3, 4', 4") n'est alimenté,
**caractérisé en ce que**
le circuit est conçu en outre de sorte qu'il détecte, à l'aide des unités de détection (7, 8), la présence d'un signal d'émission de l'appareil de radiocommunication mobile et pour commander les moyens de commutation (5, 6) en fonction de la fréquence du signal d'émission détecté par les unités de détection (7, 8) et de sorte que, de cette façon, dans l'état de circuit de base
- soit il passe dans un état de circuit GSM dans lequel l'émission de signaux de radiocommunication mobile à une fréquence de la norme GSM est possible par le biais d'une branche d'émission GSM et de l'antenne externe
- soit il passe dans un état de circuit AMRC dans lequel, selon une norme de radiocommunication mobile basée sur AMRC, l'émission est possible par le biais d'une branche d'émission pour un signal d'émission basé sur AMRC et par le biais de l'antenne externe, et la réception de signaux de radiocommunication mobile est possible par le biais de l'antenne externe,
dans l'état de circuit GSM et AMRC, seul l'amplificateur de puissance respectif (3, 4', 4") prévu pour amplifier des signaux avec la fréquence correspondante étant sous tension et le circuit étant conçu pour amener un signal d'émission, détecté le cas échéant par les unités de détection (7, 8),
- dans l'état de circuit GSM à la branche d'émission GSM ou
- dans l'état de circuit AMRC à la branche d'émission pour un signal d'émission basé sur AMRC
non par le biais d'un dispositif d'aiguillage de bande de fréquences mais en raison d'une position de commutation des contacts des moyens de commutation (6) qui est univoque et correspond à l'état de circuit AMRC ou GSM.

2. Circuit selon la revendication 1, comportant :
a) un premier sous-circuit (A) conçu exclusivement pour amplifier des signaux de radiocommunication mobile dans lequel est disposé au moins un amplificateur de réception (1,1', 1", 1"'),
b) un deuxième sous-circuit (B), doté d'au moins un amplificateur de puissance (4', 4"), qui est conçu pour amplifier des signaux de radiocommunication mobile selon la norme GSM émis par l'appareil de radiocommunication mobile par le biais de l'antenne externe,
c) un troisième sous-circuit (C) qui est conçu pour amplifier des signaux de radiocommunication mobile selon une norme de radiocommunication mobile basée sur AMRC et qui comporte au moins un amplificateur de réception (2) servant à amplifier des signaux de radiocommunication mobile reçus et un amplificateur de puissance (3) servant à amplifier des signaux de radiocommunication mobile émis par l'appareil de radiocommunication mobile,
les sous-circuits (A, B, C) étant réunis du côté antenne (a) et du côté appareil (g) par le biais des moyens de commutation (5, 6) actionnés par les unités de détection (7, 8), le circuit étant conçu pour activer par le biais des moyens de commutation (5, 6) le premier sous-circuit (A) en absence d'un signal d'émission de l'appareil de radiocommunication mobile et, en présence d'un signal d'émission de l'appareil de radiocommunication mobile, le deuxième sous-circuit (B) ou le troisième sous-circuit (C) en fonction de la fréquence dudit signal d'émission.

3. Circuit selon la revendication 2, **caractérisé en ce que** le circuit est conçu, en présence d'un signal d'émission, pour arrêter le ou les amplificateurs de réception (1, 1', 1", 1"') du premier sous-circuit (A), c'est-à-dire couper leur alimentation électrique, par le biais de moyens de commutation supplémentaires (32', 32", 32"') également actionnés par les unités de détection (7, 8).

4. Circuit selon la revendication 2 ou 3, **caractérisé en ce que** le premier sous-circuit (A) comporte plusieurs branches de fréquence (19, 20, 21) pour chacune des normes de radiocommunication mobile susmentionnées, dans chacune desquelles est disposé au moins un amplificateur de réception (1', 1", 1"') et qui sont reliées entre elles du côté antenne (a) par le biais d'une unité (9) servant à répartir des signaux ainsi que du côté appareil (g) par le biais d'une unité (10) servant à réunir des signaux.

5. Circuit selon la revendication 4, **caractérisé en ce que**, dans le premier sous-circuit (A), un triplexeur est disposé en tant qu'unité (9) de répartition de signaux du côté antenne (a) et un triplexeur est disposé en tant qu'unité (10) de réunion de signaux côté appareil (g).

6. Circuit selon la revendication 4 ou 5, **caractérisé en ce qu'**un amplificateur de réception large bande (1) est disposé en plus des amplificateurs de réception (1', 1", 1"') dans les branches de fréquence (19, 20, 21) du premier sous-circuit (A), ledit amplificateur de réception large bande étant monté en amont côté antenne (a) de l'unité (9) de répartition de signaux respectivement du triplexeur,

7. Circuit selon l'une quelconque des revendications 4 à 6, **caractérisé en ce que** l'amplificateur de réception (2) du troisième sous-circuit (C) et l'amplificateur de réception (1') de la branche de fréquence (19) correspondante du premier sous-circuit (A) sont réalisés par un amplificateur (1', 2) utilisé en commun par les deux sous-circuits (A, C), le circuit étant conçu pour intégrer cet amplificateur de réception (1', 2) par des moyens de commutation supplémentaires en alternance dans le premier sous-circuit (A) ou dans le troisième sous-circuit (C).

8. Circuit selon l'une quelconque des revendications 4 à 7, **caractérisé en ce que** le premier sous-circuit (A) conçu pour l'amplification de signaux de radiocommunication mobile reçus comporte au moins une branche de fréquence (20, 21) destinée à amplifier un signal GSM reçu et une branche de fréquence (19) destinée à amplifier un signal UMTS reçu.

9. Circuit selon la revendication 8, **caractérisé**
**en ce que** le premier sous-circuit (A) conçu pour l'amplification de signaux de radiocommunication mobile reçus comporte une branche de fréquence (21) destinée à l'amplification d'un signal GSM900 reçu, une branche de fréquence (20) destinée à l'amplification d'un signal GSM1800 reçu et une branche de fréquence (19) destinée à l'amplification d'un signal UMTS reçu et
**en ce que** le deuxième sous-circuit (B) comporte deux branches de fréquence (22, 23), à savoir une branche de fréquence (23) destinée à l'amplification d'un signal GSM900 émis par l'appareil de radiocommunication mobile et une branche de fréquence (22) destinée l'amplification d'un signal GSM1800 émis par l'appareil de radiocommunication mobile, le circuit étant conçu de sorte que, en fonction de la fréquence d'un signal GSM émis par l'appareil de radiocommunication mobile, il active la branche de fréquence (22, 23) correspondante du deuxième sous-circuit (B) par le biais des moyens de commutation actionnés par les unités de détection (7, 8), et en ce que le troisième sous-circuit (C) est conçu pour émettre et recevoir des signaux de radiocommunication mobile selon la norme UMTS.

10. Circuit selon la revendication 9, **caractérisé en ce que** l'amplificateur de puissance (3) destiné à l'amplification d'un signal UMTS du troisième sous-circuit (C) émis par l'appareil de radiocommunication mobile et l'amplificateur de puissance (4') destiné à l'amplification d'un signal GSM1800 du deuxième sous-circuit (B) émis par l'appareil de radiocommunication mobile sont réalisés par un amplificateur de puissance (3, 4') utilisé en commun par les deux sous-circuits (B, C), le circuit étant conçu de manière telle que cet amplificateur de puissance (3, 4') soit intégré par les moyens de commutation (28, 29) en fonction du type d'un signal d'émission de l'appareil de radiocommunication mobile détecté par les unités de détection (7, 8) en alternance dans le deuxième sous-circuit (B) ou dans le troisième sous-circuit (C).

11. Circuit selon la revendication 9 ou 10, **caractérisé en ce que** le circuit est conçu de manière telle qu'un signal d'émission GSM1800 puisse être amené à un détecteur (17), de l'unité de détection (7), détectant des signaux GSM ainsi que, en tant que signal de référence (R), à un détecteur (18), de l'unité de détection (8), servant à la détection de signaux d'émission UMTS, de sorte que, en présence du signal de référence (R), un signal UMTS détecté apparemment par l'unité de détection (8) plus sensible que l'unité de détection (7) soit ignoré et que le signal d'émission détecté soit traité par le circuit en tant que signal GSM1800.
